# EUROPÄISCHE PATENTSCHRIFT

(11) **EP 1 686 732 B1**
(45) Veröffentlichungstag und Bekanntmachung des Hinweises auf die Patenterteilung: **31.10.2007**
(21) Anmeldenummer: 05001799.5
(22) Anmeldetag: 28.01.2005
(51) Int. Cl.: H04L 12/40, G05B 19/042, G05B 19/418, H04L 12/08, H04L 29/06

(54) **Verfahren und System zur Übertragung von Telegrammen**
Method and system for transmitting protocol data units
Procédé et système de transmission d'unités de données de protocole

(43) Veröffentlichungstag der Anmeldung: 02.08.2006
(73) Patentinhaber: SIEMENS AKTIENGESELLSCHAFT, 80333 München (DE)
(72) Erfinder: Barthel, Herbert, 91074 Herzogenaurach (DE); Binder, Ingmar, 92289 Ursensollen (DE); Fuchs, Heiner, 91056 Erlangen (DE); Mattes, Rainer, 54349 Trittenheim (DE); Pfister, Alexander, 91330 Eggolsheim (DE); Schmauss, Wolfgang, 90607 Rückersdorf (DE); Sigwart, Edgar, 92224 Amberg (DE)

(56) Entgegenhaltungen:
- EP-A- 1 261 184
- DE-A1- 19 840 562
- US-A1- 2004 230 323

## Beschreibung

Die Erfindung betrifft ein System sowie ein Verfahren zum Übertragen von Telegrammen. Das System weist mindestens ein erstes Kommunikationsmittel, welches zum Senden von Telegrammen vorgesehen ist und mindestens ein zweites Kommunikationsmittel, welches zum Empfangen von Telegrammen vorgesehen ist, auf. Dabei weist ein Telegramm einen Prüfwert auf, welcher aus einem Nutzdatenteil des Telegramms bestimmbar ist. Das erste Kommunikationsmittel weist einen ersten Telegrammzähler auf, welcher zur Zuordnung eines Zählwerts zu einem Telegramm entsprechend einer Sendereihenfolge vorgesehen ist. Ein Telegramm ist ein Datenpaket, das innerhalb eines Kommunikationsnetzes zwischen Kommunikationsmitteln übertragbar ist.

Die Verwendung eines Prüfwerts dient der Gewährleistung von Datenintegrität bei der Datenübermittlung oder -speicherung. Dabei wird ein Wert, im einfachsten Fall eine Prüfsumme, aus Daten eines Telegramms mit einem geeigneten Verfahren bestimmt, z. B. berechnet. Der sich ergebende Wert wird dann als Prüfwert mit gespeichert bzw. übertragen. Der Empfänger des Telegramms kann aus den Daten ebenfalls einen Prüfwert bestimmen und diesen mit dem mitübertragenen Prüfwert des Senders vergleichen. Sind die beiden Prüfwerte unterschiedlich, liegt ein Fehler, insbesondere ein Übertragungsfehler, vor. Sind die beiden Prüfwerte identisch, ist die Nachricht mit hoher Wahrscheinlichkeit korrekt übertragen worden.

Aus der EP 1 261 184 ist ein Verfahren zur Fehlerbehebung innerhalb des statischen Anteils eines Datentelegramms bekannt.

Aus der US-2004/230323-A ist ein Verfahren bekannt, wobei Datentelegramme einen Telegrammzählwert des Senders umfassen. Bei eine Nichtübereinstimmung zwischen dem Zählwert des Senders und dem Zählwert des Empfängers wird der Zählwert des Empfängers auf dem Zählwert des Senders Zurückgesetzt, wonach die Kommunikation fortgesetzt wird.

Der Erfindung liegt die Aufgabe zugrunde, die Erkennung von Fehlern bei der Übertragung von Telegrammen zu verbessern.

Diese Aufgabe wird durch ein System gemäß Anspruch 1 gelöst.

Diese Aufgabe wird durch ein Verfahren gemäβ Anspruch 9 gelöst.

Der Erfindung liegt die Idee zugrunde, nicht den gesamten Zählwert im Nutzdatenteil des Telegramms zu übertragen, den Zählwert jedoch trotzdem bei der Bestimmung des Prüfwerts zu verwenden. Statt des gesamten Zählwerts wird nur eine eine Veränderung des Zählwerts signalisierende Information als Bestandteil des Nutzdatenteils des Telegramms übertragen. Damit wird die Fehleraufdeckungswahrscheinlichkeit bei der Telegrammübertragung erhöht, ohne den Nutzdatenteil des jeweilsgen Telegramms wesentlich zu reduzieren. Die Unterscheidung der einzelnen Telegramme mittels Zählwert wird somit verbessert, da ein Telegrammzähler mit einem Zählwert mit mehr Stellen einsetzbar ist, ohne den Nutzdatenteil der Datenpakete wesentlich einzuschränken. Ein Telegrammzähler wird auch als laufende Telegrammnummer bezeichnet.

Um die Belastung des Nutzdatenteils mit den höherwertigen Stellen des Zählwerts möglichst gering zu halten, wird gemäß einer vorteilhaften Ausgestaltung der Erfindung vorgeschlagen, dass der Zählwert in höherwertige Stellen und mindestens eine niederwertige Stelle aufteilbar ist und die eine Veränderung des Zählwerts signalisierende Information die mindestens eine niederwertige Stelle ist. Die höherwertigen Stellen des Zählwerts werden somit nicht im Nutzdatenteil des Telegramms übertragen, diese höherwertigen Stellen werden jedoch trotzdem bei der Bestimmung des Prüfwerts verwendet. Vom Zählwert wird nur die mindestens eine niederwertige Stelle als Bestandteil des Nutzdatenteils des Telegramms übertragen.

Ist der Zählwert gemäß einer weiteren vorteilhaften Ausgestaltung der Erfindung ein binärer Wert, so umfassen vorteilhafterweise die höherwertigen Stellen alle höherwertigen Bit und die mindestens eine niederwertige Stelle das niederwertigste Bit des Zählwerts.

Um die Sicherheit bei der Erkennung von Telegrammfehlern zu erhöhen, ist gemäß einer weiteren vorteilhaften Ausgestaltung der Erfindung der Prüfwert durch eine zyklische Redundanzprüfung ermittelbar. Eine solche zyklische Redundanzprüfung ist z. B. der so genannte Cyclic Redundancy Check (CRC). Ein CRC verwendet zur Bestimmung des Prüfwerts statt einfacher Addition eine Polynomdivision und ist im Allgemeinen effektiver bei der Erkennung von Zufallsfehlern als ein auf einer einfachen Prüfsumme basierendes Verfahren.

Um eine besonders einfache Synchronisierung zwischen dem ersten und dem zweiten Kommunikationsmittel zu erreichen, wird gemäß der Erfindung vorgesehen, dass die Mittel zur Synchronisierung zur Übertragung einer Rücksetzinformation zwischen den Kommunikationsmitteln vorgesehen sind, wobei die Rücksetzinformation mit einer Rücksetzung der Telegrammzähler auf einen Rücksetzwert verknüpft ist.

Die Mittel zur Synchronisierung sind zur Übertragung der Rücksetzinformation bei Start einer Kommunikation und nach Vorliegen eines Kommunikationsfehlers vorgesehen.

Gemäß weiteren vorteilhaften Ausgestaltungen der Erfindung sind die Kommunikationsmittel Kommunikationsteilnehmer in einem geschalteten Netzwerk oder in einem Feldbussystem. Die Übertragung von Telegrammen kann weiter verbessert werden, wenn gemäß einer vorteilhaften Ausgestaltung der Erfindung die Telegramme zumindest teilweise in den Kommunikationsmitteln speicherbar sind.

Vorteilhafterweise ist das System zum sicherheitsgerichteten Übertragen von Telegrammen vorgesehen. Sicherheitsgerichtet (engl. failsafe) bedeutet, dass das System bei Störung oder im Fehlerfall in einen sicheren Zustand übergeht. Bei einem sicherheitsgerichteten System müssen alle im System vorkommenden Fehler (hier Fehler, die in den Kommunikationsmitteln auftreten können) mit einer hinreichend großen Wahrscheinlichkeit erkannt und beherrscht werden, mit dem Ziel die Gefährdung von Mensch, Umwelt und/oder Maschine durch Fehler des Systems ausreichend zu reduzieren.

Nachfolgend wird die Erfindung anhand der in den Figuren dargestellten Ausführüngsbeispiele näher beschrieben und erläutert.

Es zeigen:
- FIG 1: ein geschaltetes Kommunikationsnetzwerk mit Kommunikationsmitteln,
- FIG 2: eine schematische Darstellung der verschiedenen Kommunikationsschichten in einem Kommunikationsnetzwerk,
- FIG 3: die Berechnung eines Prüfwerts,
- FIG 4: einen Teil eines Telegramms und
- FIG 5: den zeitlichen Ablauf bei Vorliegen eines Kommunikationsfehlers.

Im Folgenden wird zur Erläuterung des technischen Hintergrunds der Erfindung kurz auf die speziellen Erfordernisse der Kommunikation in sicherheitsgerichteten Systemen eingegangen. Insbesondere in sicherheitsgerichteten Anlagen müssen Fehler aller Art mit hoher Wahrscheinlichkeit erkannt werden und so beherrscht werden, dass sie keine unzulässige Reaktion auslösen. Dies gilt in solchen Anlagen auch für die Kommunikation, z. B. über Feldbusse. Verstärkt werden für solche Feldbuskommunikationen auch Ethernet-Standards und Ethernet-Komponenten benutzt. Solche Komponenten sind beispielsweise als Switches ausgeführte Kommunikationsmittel. In der Feldbuskommunikation können sehr viele (z. B. 100) Switches in Reihe angeordnet sein. Diese Switches haben die Eigenschaft, dass sie sehr viele Telegramme speichern können (1000 oder mehr). Wenn nun in dem Switch ein Fehler auftritt (z. B. kippt durch ein Alphateilchen ein Bit) kann es vorkommen, dass der Switch Telegramme, die er bereits gesendet hat, wiederholt zu senden. Das kann bei sicherheitsgerichteten Anlagen dazu führen, dass ein Aktor, der per Telegrammbefehl bereits abgeschaltet wurde, bedingt durch die noch mal gesendeten "alten Telegramme" wieder eingeschaltet wird (oder auch umgekehrt). Das kann somit zu einem gefährlichen Fehler führen, der in sicherheitsgerichteten Anlagen nicht tolerierbar ist.

Herkömmliche Feldbusse wie PROFIBUS oder Interbus-S nutzten für ihre Kommunikation keine Switches. Die verwendeten Kommunikationsmittel konnten nur wenige Telegramme zwischenspeichern (typischerweise zwei), deshalb genügte es, einen Fehler der bis zu drei alte Telegramme verursacht, zu beherrschen. Diese herkömmlichen sicherheitsgerichteten Kommunikationsverfahren benutzen einen Telegrammzähler mit Zählwerten von maximal acht Bit Breite. Mit Hilfe dieses Telegrammzählers ist es möglich eine Vielzahl von Telegrammfehlern aufzudecken, wie z. B. Telegrammverlust, Telegrammverdopplung, Einfügung eines alten Telegramms, falsche Telegrammfolge.

Da aber mit Einführung von Switches und den damit möglichen Strukturen auch die Wahrscheinlichkeit von Telegrammverdopplungen stark zunimmt, und die sicherheitsgerichtete Kommunikationsschicht keinen Kredit an den Fehlererkennungsmechanismen der Standard-Kommunikationsschichten nehmen sollte, ist es erforderlich, dass ein solcher Fehler mit sehr hoher Wahrscheinlichkeit aufgedeckt wird. Ein 8-Bit-Telegrammzähler deckt solche Fehler mit einer Wahrscheinlichkeit von 1:255 auf, was für Sicherheitsanwendungen üblicherweise zu wenig ist. Für eine sicherheitsgerichtete standardisierbare Kommunikation werden üblicherweise Restfehlerraten von 10⁻⁹ pro Stunde gefordert. Gemäß Ausführungsbeispiel wird ein Telegrammzähler mit einem Zählwert von 32 Bit Länge eingeführt. Die zusätzlichen 24 Bit würden die mögliche Anzahl der Nettodaten reduzieren, da ein Datenpaket, ein Telegramm, üblicherweise in der Länge begrenzt ist, z. B. bei kleinmodularer Peripherie auf 8 Byte. Die Erfindung verbessert die Unterscheidung der einzelnen Telegramme durch den jeweiligen Zählwert des Telegrammzählers ohne die Datenpakete hinsichtlich Nutzdatenanteil wesentlich einzuschränken.

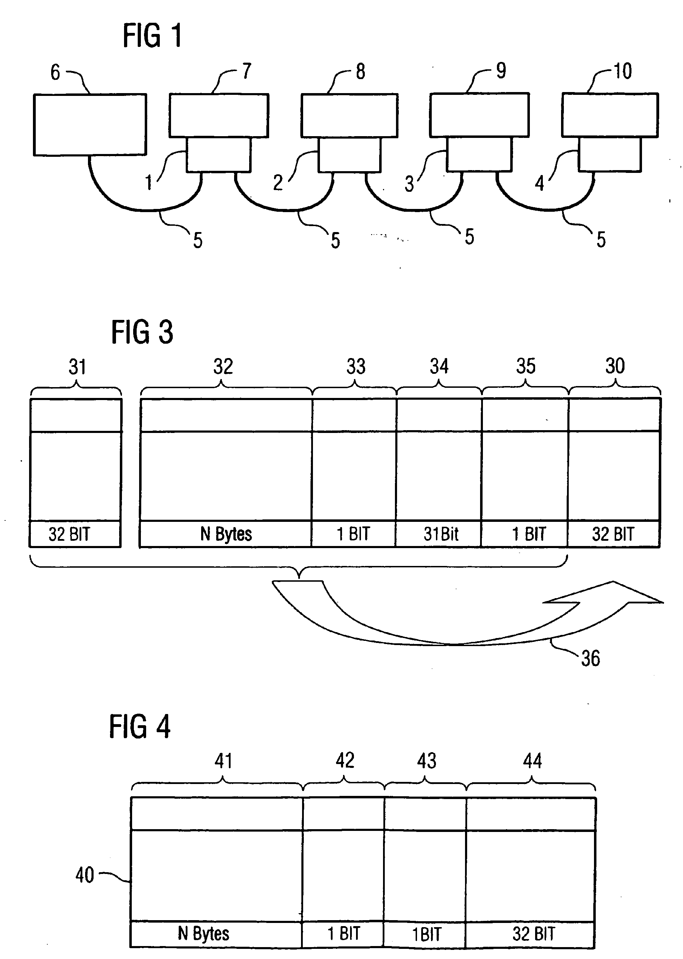

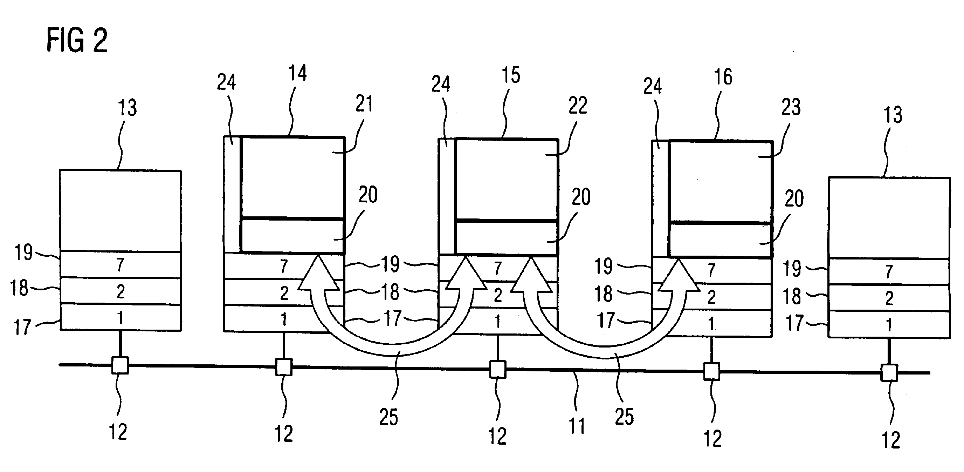

FIG 1 zeigt ein Kommunikationssystem mit Kommunikationsmitteln 1 - 4, welche jeweils zum Senden und/oder Empfangen von Telegrammen vorgesehen sind. Kommunikationsmittel werden auch Kommunikationspartner oder Kommunikationsteilnehmer genannt. Gemäß Ausführungsbeispiel sind die Kommunikationsmittel als Switches ausgeführt. Diese sind über Punkt-zu-Punkt-Verbindungen 5 miteinander und mit einer sicherheitsgerichteten speicherprogrammierbaren Steuerung 6 verbunden. Die speicherprogrammierbare Steuerung 6 weist ebenfalls Kommunikationsmittel auf. Die Kommunikationsmittel 1 - 4 dienen als Kommunikationsschnittstelle zu sicherheitsgerichteten Sensoren 7, 8, 9 bzw. sicherheitsgerichteten Aktoren 10 und können in diese integriert sein.

FIG 2 verdeutlicht die sicherheitsgerichtete Kommunikation mit Hilfe des so genannten Schichtenmodells, in diesem Fall basierend auf dem ISO/OSI-Schichtenmodell. Ein Schichtenmodell beschreibt in Form von logischen abgeschlossenen Schichten, wie die Kommunikation in einem Netzwerk aufgebaut ist. In diesem Fall weist das Kommunikationsmodell für die nicht sicherheitsgerichtete Kommunikation sieben Schichten auf, von denen in Figur 2 drei Schichten exemplarisch dargestellt sind. Diese nicht sicherheitsgerichteten Schichten 17, 18, 19, auch Black Channel genannt, umfassen nicht sicherheitsgerichtete Komponenten wie z. B. ASICs, Links, Kabel, usw. Dargestellt sind die untersten beiden Schichten 17, 18 sowie die oberste Schicht der nicht sicherheitsgerichteten Kommunikation 19. Die unterlagerte nicht sicherheitsgerichtete Kommunikation weist die notwendigen Mittel zum Erreichen der im jeweiligen Anwendungsfall geforderten Verfügbarkeit auf. D. h. die nicht sicherheitsgerichteten Schichten stellen die jeweils geforderte Verfügbarkeit der Kommunikation sicher. In der sicherheitsgerichteten Kommunikationsschicht 20, auch Sicherheitsschicht genannt, welche z. B. redundant aufgebaut ist, wird die erforderliche Sicherheit (z. B. Restfehlerrate < 10⁻⁹ / Stunde) erreicht, d. h. die erforderlichen zusätzlichen Eigenschaften für eine hohe Sicherheit werden hier von der Sicherheitsschicht erfüllt, z. B. Profisafe. Die Sicherheitsschicht stellt sicherheitsgerichtete Funktionen zur Verfügung, z. B. bezüglich Adressierung, Watch Dog Timer, Sequenzierung, Signatur, etc. Gemäß Ausführungsbeispiel von Figur 2 sind die Kommunikationsmittel als Teil von Standard-Eingabe-/Ausgabebaugruppen 13 sowie einer sicherheitsgerichtete Eingabebaugruppe 14, einer sicherheitsgerichteten Steuerung 15 und einer sicherheitsgerichteten Ausgabebaugruppe 16 ausgeführt. Die Kommunikationsmittel kommunizieren über Punkt-zu-Punkt-Verbindungen 11 und über durch diese verbundene Switches 12. Die sicherheitsgerichtete Kommunikation wird durch die Pfeile 25 symbolisiert. Auf die sicherheitsgerichtete Kommunikationsschicht 20 setzen sicherheitsgerichtete Anwendungen 21 - 23 auf, welche jedoch selbst nicht Teil des Profils der sicherheitsgerichteten Kommunikationsschicht 20 sind. Für die sicherheitsgerichteten Funktionen nicht relevante Funktionen 24 setzen direkt auf die nicht sicherheitsgerichteten Kommunikationsschichten 17 - 19 auf. Solche nicht sicherheitsgerichteten Funktionen betreffen beispielsweise die Diagnose. Die sicherheitsgerichtete Kommunikationsschicht 20 realisiert die im Folgenden erläuterten sicherheitsgerichteten Funktionen wie Prüfwertbestimmung, Telegrammzähler, Synchronisierung.

FIG 3 verdeutlicht die Bestimmung eines Prüfwerts gemäß einem Ausführungsbeispiel der Erfindung. Sicherheitsgerichtete Kommunikationsverfahren sichern die in Telegrammen übertragenen Daten üblicherweise durch einen Prüfwert, auch Sicherungsanhang genannt, wie z. B. CRC. Gemäß dem Ausführungsbeispiel der Erfindung werden die höherwertigen Bits des Zählwerts des Telegrammzählers nicht in den Nutzdaten, auch Nettodaten genannt, übertragen, sondern dem Kommunikationspartner auf andere Weise bekannt gemacht, bzw. dieser Kommunikationspartner wird auf den neuen Zählerstand synchronisiert. Zudem werden diese höherwertigen Bits in den Sicherungsanhang, den Prüfwert, eingerechnet. Damit wird die Fehleraufdeckung im Beispiel Profisafe von 2⁸ um den Faktor 2²⁴ erhöht, ohne die Nettodaten in den Telegrammen zu reduzieren. Der Telegrammzähler kann wie folgt synchronisiert werden: Beim Start der Kommunikation wird er auf Null gesetzt. Bei jedem Kommunikationsfehler wird er wieder rückgesetzt. Es kann vorkommen, dass einer der beiden Kommunikationspartner nicht mitbekommt, dass der andere einen Kommunikationsfehler erkannt hat. Deshalb muss der Sender eine Rücksetzinformation mitschicken, dass er den Zähler zurückgesetzt hat. Bei Anwendung dieses Verfahrens genügen zwei Bits um einen Telegrammzähler beliebiger Bitlänge zu führen. Ein Bit das - als eine Veränderung des Zählwerts signalisierende Information - bei jeder Erhöhung des Zählwerts des Telegrammzählers den Zustand wechselt und ein Bit das als Rücksetzinformation den Zählerreset anzeigt. Zur Erkennung von Telegrammverdopplungen wird der gesamte Zählwert in den Prüfwert einberechnet. Mit diesem Verfahren kann in manchen Fällen zwar nicht unterschieden werden ob ein "CRC-Fehler" vorliegt oder ein Fehler des Zählwerts, es ist aber bei sicherheitsgerichteten Anwendungen nicht erforderlich dies zu unterscheiden. Wesentlich ist, dass das System erkannt hat, dass ein Fehler vorliegt damit es die sicherheitsgerichtete Fehlerreaktion einleiten kann. Der zu bestimmende 32 Bit umfassende Prüfwert ist hier mit dem Bezugszeichen 30 gekennzeichnet. Der Vorgang der Bestimmung des Prüfwerts wird durch den Pfeil 36 angedeutet. Der Telegrammzähler weist einen Zählwert von 32 Bit Breite auf. Damit wird die Wahrscheinlichkeit, dass im Fehlerfall ein wiederholt gesendetes altes Telegramm genau den passenden nächsten Zählerstand des eigentlich zu sendenden Telegramms aufweist, sehr gering (bei 32-Bit-Zähler: 2⁻³²). Bei der Bestimmung des Prüfwerts 30 wird ein Initialwert 31 für den Prüfwert berücksichtigt, welcher ebenfalls eine Breite von 32 Bit aufweist. Zudem werden die sicherheitsgerichteten Daten 32 in der erforderlichen Länge, ein Bit als Rücksetzinformation 33, welches den Reset des Telegrammzählers anzeigt, die 31 höheren Bits des Zählwerts, mit dem Bezugszeichen 34 gekennzeichnet, sowie das niederwertigste Bit des Zählwerts, mit dem Bezugszeichen 35 gekennzeichnet, bei der Bestimmung des Prüfwerts 30 berücksichtigt. Dieses Verfahren (virtueller Zähler) wird vorteilhafterweise auch für die Datenquittung angewandt. Hiermit erkennt der Sender sehr sicher, dass der Empfänger die gesendeten Daten erhalten hat.

FIG 4 zeigt den sicherheitsgerichteten Teil des Telegramms, welches zwischen den Kommunikationsmitteln über das Kommunikationsnetzwerk übertragen wird. Dieser sicherheitsgerichtete Teil 40 wird in der sicherheitsgerichteten Kommunikationsschicht, z. B. der Kommunikationsschicht 20 gemäß FIG 2, erzeugt und verarbeitet. Die unterlagerten, nicht sicherheitsgerichteten Kommunikationsschichten fügen diesem sicherheitsgerichteten Teil 40 gegebenenfalls weitere nicht sicherheitsgerichtete Informationen hinzu (Zwiebelprinzip). Der Telegrammteil 40 setzt sich zusammen aus den sicherheitsgerichteten Daten 41 in der erforderlichen Länge, dem Bit 42, welches den Reset des Telegrammzählers anzeigt, dem niederwertigsten Bit des Zählwerts, mit dem Bezugszeichen 43 gekennzeichnet, sowie dem sicherheitsgerichteten Prüfwert 44, welcher 32 Bit aufweist.

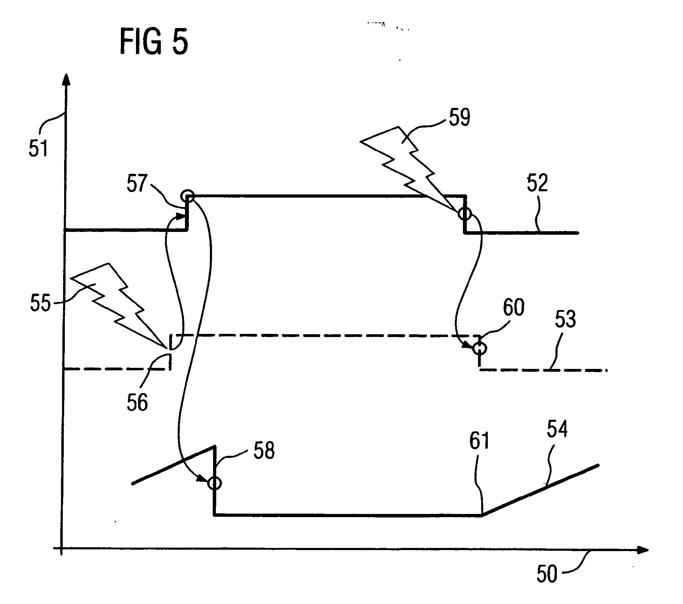

FIG 5 zeigt den Ablauf bei bzw. nach Auftreten eines Kommunikationsfehlers in einem Ausführungsbeispiel des erfindungsgemäßen Systems sowie die Synchronisation der Telegrammzähler. Mit dem Bezugszeichen 50 ist die Zeitachse gekennzeichnet, mit dem Bezugszeichen 51 die Werteachse. Dargestellt sind die zeitlichen Verläufe des Reset-Bits 52, eines Signals 53, welches den Zustand der Ausgangssignale angibt, und des Zählwerts 54 des Telegrammzählers. Das Reset-Bit 52 ist ein Kontrollbit, das der Sender zyklisch zum Empfänger sendet. Das Reset-Bit 52 entspricht der Rücksetzinformation 33. Solange das Reset-Bit 52 den Wert Eins hat, bleibt der Zählwert 54 auf Null bzw. seinem Startwert. Das Signal 53 zeigt den Zustand der Ausgangssignale an: Wenn das Signal 53 Eins ist, werden Failsafe-Werte ausgegeben, wenn das Signal 53 Null ist, werden Prozesswerte ausgegeben. Das Auftreten eines Fehlers ist durch den Pfeil mit dem Bezugszeichen 55 symbolisiert. Im Fehlerfall wird von der sicherheitsgerichteten Steuerung, dem so genannten F-Host (F = failsafe) und von den an diese Steuerung angeschlossenen sicherheitsgerichteten Slaves (F-Slaves) das Signal 53 auf Eins gesetzt (Bezugszeichen 56), da sich der Datenempfänger nicht mehr auf die Gültigkeit der Kommunikationsdaten verlassen kann. In diesem Fall werden nicht mehr Prozessdaten, sondern so genannte sicherheitsgerichtete Daten, auch Failsafe Values genannt, übermittelt. Dies führt unmittelbar zu einem Setzen des Reset-Bits 52, angedeutet durch das Bezugszeichen 57, und nachfolgend zu einem Rücksetzen 58 des Zählwerts 54 auf den Wert Null bzw. den Startwert. Erst nach einer Quittierung 59 erfolgt ein Rücksetzen 60 des Signals 53, und damit die erneute Freigabe der Prozessdatenübertragung, sowie eine erneute Freigabe 61 des Zählwerts 54 des Telegrammzählers.

Zusammengefasst betrifft die Erfindung somit ein System sowie ein Verfahren zum Übertragen von Telegrammen. Das System weist mindestens ein erstes Kommunikationsmittel 1, welches zum Senden von Telegrammen vorgesehen ist, und mindestens ein zweites Kommunikationsmittel 2 auf, welches zum Empfangen von Telegrammen vorgesehen ist, wobei ein Telegramm einen Prüfwert 30 aufweist, welcher aus einem Nutzdatenteil 32 - 35 des Telegramms bestimmbar ist, wobei das erste Kommunikationsmittel 1 einen ersten Telegrammzähler aufweist, welcher zur Zuordnung eines Zählwerts 34, 35 zu einem Telegramm entsprechend einer Sendereihenfolge vorgesehen ist. Um die Erkennung von Fehlern bei der Übertragung von Telegrammen zu verbessern, wird vorgeschlagen, dass der Zählwert 34, 35 zur Bestimmung des Prüfwerts 30 Bestandteil des Nutzdatenteils 32 - 35 ist, dass eine eine Veränderung des Zählwerts signalisierende Information Bestandteil des Nutzdatenteils bei Übertragung des Telegramms ist, dass das zweite Kommunikationsmittel 2 einen zweiten Telegrammzähler aufweist und dass Mittel zur Synchronisierung des ersten und zweiten Telegrammzählers vorgesehen sind.

## Patentansprüche

1. System zum Übertragen von Telegrammen, mit mindestens einem ersten Kommunikationsmittel (1), welches zum Senden von Telegrammen vorgesehen ist, mit mindestens einem zweiten Kommunikationsmittel (2), welches zum Empfangen von Telegrammen vorgesehen ist, wobei ein Telegramm einen Prüfwert (30) aufweist, welcher aus einem Nutzdatenteil (32 - 35) des Telegramms bestimmbar ist, wobei das erste Kommunikationsmittel (1) einen ersten Telegrammzähler aufweist, welcher zur Zuordnung eines Zählwerts (34, 35) zu einem Telegramm entsprechend einer Sendereihenfolge vorgesehen ist, wobei der Zählwert (34, 35) zur Bestimmung des Prüfwerts (30) Bestandteil des Nutzdatenteils (32 - 35) ist, wobei eine eine Veränderung des Zählwerts signalisierende Information Bestandteil des Nutzdatenteils bei Übertragung des Telegramms ist, wobei das zweite Kommunikationsmittel (2) einen zweiten Telegrammzähler aufweist und wobei Mittel zur Synchronisierung des ersten und zweiten Telegrammzählers vorgesehen sind, **dadurch gekennzeichnet, dass** die Mittel zur Synchronisierung zur Übertragung einer Rücksetzinformation (33) zwischen den Kommunikationsmitteln bei Start einer Kommunikation und nach Vorliegen eines Kommunikationsfehlers vorgesehen sind, wobei die Rücksetzinformation (33) mit einer Rücksetzung der Telegrammzähler auf einen Rücksetzwert verknüpft ist.

2. System nach Anspruch 1,
**dadurch gekennzeichnet,**
**dass** der Zählwert (34, 35) in höherwertige Stellen (34) und mindestens eine niederwertige Stelle (35) aufteilbar ist und die eine Veränderung des Zählwerts signalisierende Information die mindestens eine niederwertige Stelle (35) ist.

3. System nach einem der Ansprüche 1 oder 2,
**dadurch gekennzeichnet,**
**dass** der Zählwert (34, 35) ein binärer Wert ist, wobei die höherwertigen Stellen (34) alle höherwertigen Bit und die mindestens eine niederwertige Stelle (35) das niederwertigste Bit des Zählwerts umfassen.

4. System nach einem der vorhergehenden Ansprüche,
**dadurch gekennzeichnet,**
**dass** der Prüfwert (30) durch eine zyklische Redundanzprüfung ermittelbar ist.

5. System nach einem der vorhergehenden Ansprüche,
**dadurch gekennzeichnet,**
**dass** die Kommunikationsmittel (1, 2) Kommunikationsteilnehmer in einem geschalteten Netzwerk sind.

6. System nach einem der vorhergehenden Ansprüche,
**dadurch gekennzeichnet,**
**dass** die Kommunikationsmittel (1, 2) Kommunikationsteilnehmer in einem Feldbussystem sind.

7. System nach einem der vorhergehenden Ansprüche,
**dadurch gekennzeichnet,**
**dass** die Telegramme zumindest teilweise in den Kommunikationsmitteln (1, 2) speicherbar sind.

8. System nach einem der vorhergehenden Ansprüche,
**dadurch gekennzeichnet,**
**dass** das System zum sicherheitsgerichteten Übertragen von Telegrammen vorgesehen ist.

9. Verfahren zum Übertragen von Telegrammen zwischen einem ersten und einem zweiten Kommunikationsmittel (1, 2), bei welchem Verfahren aus einem Nutzdatenteil (32 - 35) eines Telegramms ein Prüfwert (30) bestimmt wird, mit einem ersten Telegrammzähler des ersten Kommunikationsmittels (1) ein Zählwert (34, 35) zu einem Telegramm entsprechend einer Sendereihenfolge zugeordnet wird, wobei der Zählwert (34, 35) bei der Bestimmung des Prüfwerts (30) Bestandteil des Nutzdatenteils (32 - 35) ist, wobei eine eine Veränderung des Zählwerts signalisierende Information als Bestandteil des Nutzdatenteils des Telegramms übertragen wird, wobei ein zweiter Telegrammzähler eines zweiten Kommunikationsmittels (2) mit dem ersten Telegrammzähler synchronisiert wird, **dadurch gekennzeichnet, dass** zur Synchronisierung der Telegrammzähler eine Rücksetzinformation (33) zwischen den Kommunikationsmitteln (1, 2) bei Start einer Kommunikation und nach Vorliegen eines Kommunikationsfehlers übertragen wird, wobei die Rücksetzinformation (33) mit einer Rücksetzung der Telegrammzähler auf einen Rücksetzwert verknüpft ist.

10. Verfahren nach Anspruch 9,
**dadurch gekennzeichnet,**
**dass** der Zählwert (34, 35) in höherwertige Stellen (34) und mindestens eine niederwertige Stelle (35) aufgeteilt wird und die eine Veränderung des Zählwerts signalisierende Information die mindestens eine niederwertige Stelle (35) ist.

11. Verfahren nach einem der Ansprüche 9 oder 10,
**dadurch gekennzeichnet,**
**dass** der Zählwert (34, 35) ein binärer Wert ist, wobei die höherwertigen Stellen (34) alle höherwertigen Bit und die mindestens eine niederwertige Stelle (35) das niederwertigste Bit des Zählwerts umfassen.

12. Verfahren nach einem der Ansprüche 9 bis 11,
**dadurch gekennzeichnet,**
**dass** der Prüfwert (30) durch eine zyklische Redundanzprüfung ermittelt wird.

13. Verfahren nach einem der Ansprüche 9 bis 12,
**dadurch gekennzeichnet,**
**dass** die Kommunikationsmittel (1, 2) Kommunikationsteilnehmer in einem geschalteten Netzwerk sind.

14. Verfahren nach einem der Ansprüche 9 bis 13,
**dadurch gekennzeichnet,**
**dass** die Kommunikationsmittel (1, 2) Kommunikationsteilnehmer in einem Feldbussystem sind.

15. Verfahren nach einem der Ansprüche 9 bis 14,
**dadurch gekennzeichnet,**
**dass** die Telegramme zumindest teilweise in den Kommunikationsmitteln (1, 2) gespeichert werden.

16. Verfahren nach einem der Ansprüche 9 bis 15,
**dadurch gekennzeichnet,**
**dass** die Telegramme sicherheitsgerichtet übertragen werden.

## Claims

1. System for transmitting telegrams, said system having at least one first communication means (1) which are provided for sending telegrams and having at least one second communication means (2) which are provided for receiving telegrams, with a telegram having a check value (30) which can be determined from a payload data part (32 - 35) of the telegram, with the first communication means (1) having a first telegram counter provided for assigning a count value (34, 35) to a telegram in accordance with a send sequence, with the count value (34, 35) for determining the check value (30) being a component of the payload data part (32 - 35), with information signalling a change in the count value being a component of the payload data part when the telegram is transmitted, with the second communication means (2) having a second telegram counter, and with means being provided for synchronising the first and second telegram counter, **characterised in that** the means for synchronising are provided for transmitting resetting information (33) between the communication means at the start of a communication and after a communication error has occurred, with the resetting information (33) being linked to a resetting of the telegram counters to a reset value.

2. System according to claim 1,
**characterised in that**
the count value (34, 35) is divisible into higher-order positions (34) and at least one lower-order position (35) and the information signalling a change in the count value is the at least one lower-order position (35).

3. System according to one of claims 1 or 2,
**characterised in that**
the count value (34, 35) is a binary value, with the higher-order positions (34) containing all the higher-value bits and the at least one lower-order position (35) containing the lowest-order bit of the count value.

4. System according to one of the preceding claims,
**characterised in that**
the check value (30) can be determined by means of a cyclic redundancy check.

5. System according to one of the preceding claims,
**characterised in that**
the communication means (1, 2) are communication subscribers in a switched network.

6. System according to one of the preceding claims,
**characterised in that**
the communication means (1, 2) are communication subscribers in a fieldbus system.

7. System according to one of the preceding claims,
**characterised in that**
the telegrams can be stored at least partially in the communication means (1, 2).

8. System according to one of the preceding claims,
**characterised in that**
the system is provided for the failsafe transmission of telegrams.

9. Method for transmitting telegrams between a first and second communication means (1, 2), in which method a check value (30) is determined from a payload data part (32 - 35) of a telegram, by means of a first telegram counter of the first communication means (1) a count value (34, 35) is assigned to a telegram in accordance with a send sequence, with the count value (34, 35) for determining the check value (30) being a component of the payload data part (32 - 35), with information signalling a change in the count value being transmitted as a component of the telegram's payload data part, with a second telegram counter of a second communication means (2) being synchronised with the first telegram counter, **characterised in that** in order to synchronise the telegram counters resetting information (33) is transmitted between the communication means (1, 2) at the start of a communication and after a communication error has occurred, with said resetting information (33) being linked to a resetting of the telegram counters to a reset value.

10. Method according to claim 9,
**characterised in that**
the count value (34, 35) is divided into higher-order positions (34) and at least one lower-order position (35) and the information signalling a change in the count value is the at least one lower-order position (35).

11. Method according to one of claims 9 or 10,
**characterised in that**
the count value (34, 35) is a binary value, with the higher-order positions (34) containing all the higher-order bits and the at least one lower-order position (35) containing the lowest-order bit of the count value.

12. Method according to one of claims 9 to 11,
**characterised in that**
the check value (30) is determined by means of a cyclic redundancy check.

13. Method according to one of claims 9 to 12,
**characterised in that**
the communication means (1, 2) are communication subscribers in a switched network.

14. Method according to one of claims 9 to 13,
**characterised in that**
the communication means (1, 2) are communication subscribers in a fieldbus system.

15. Method according to one of claims 9 to 14,
**characterised in that**
the telegrams are stored at least partially in the communication means (1, 2).

16. Method according to one of claims 9 to 15,
**characterised in that**
the telegrams are transmitted in a failsafe manner.

## Revendications

1. Système de transmission de télégrammes, ayant au moins un premier moyen de communication (1) qui est prévu pour l'émission de télégrammes, ayant au moins un deuxième moyen de communication (2) qui est prévu pour la réception de télégrammes, un télégramme comportant une valeur de contrôle (30) qui peut être déterminée à partir d'une partie de données utiles (32 à 35) du télégramme, le premier moyen de communication (1) comportant un premier compteur de télégrammes qui est prévu pour associer une valeur de comptage (34, 35) à un télégramme en fonction d'un ordre d'émission, la valeur de comptage (34, 35) pour la détermination de la valeur de contrôle (30) faisant partie de la partie de données utiles (32 à 35), une information signalant une modification de la valeur de comptage faisant partie de la partie de données utiles lors de la transmission du télégramme, le deuxième moyen de communication (2) comportant un deuxième compteur de télégrammes et des moyens étant prévus pour la synchronisation du premier et du deuxième compteur de télégrammes, **caractérisé par le fait que** les moyens pour la synchronisation sont prévus pour la transmission d'une information de remise à l'état initial (33) entre les moyens de communication lors du démarrage d'une communication et après l'occurrence d'une erreur de communication, l'information de remise à l'état initial (33) étant combinée avec une remise à l'état initial des compteurs de télégrammes sur une valeur de remise à l'état initial.

2. Système selon la revendication 1,
**caractérisé par le fait que** la valeur de comptage (34, 35) peut être divisée en positions de poids fort (34) et en au moins une position de poids faible (35) et **par le fait que** l'information signalant une modification de la valeur de comptage est la ou les positions de poids faible (35).

3. Système selon l'une des revendications 1 ou 2,
**caractérisé par le fait que** la valeur de comptage (34, 35) est une valeur binaire, les positions de poids fort (34) comprenant tous les bits de poids fort de la valeur de comptage et la ou les positions de poids faible (35) comprenant le bit de poids le plus faible de la valeur de comptage.

4. Système selon l'une des revendications précédentes,
**caractérisé par le fait que** la valeur de contrôle (30) peut être déterminée par un contrôle de redondance cyclique.

5. Système selon l'une des revendications précédentes,
**caractérisé par le fait que** les moyens de communication (1, 2) sont des abonnés de communication dans un réseau commuté.

6. Système selon l'une des revendications précédentes,
**caractérisé par le fait que** les moyens de communication (1, 2) sont des abonnés de communication dans un système de bus de terrain.

7. Système selon l'une des revendications précédentes,
**caractérisé par le fait que** les télégrammes peuvent être mémorisés au moins en partie dans les moyens de communication (1, 2).

8. Système selon l'une des revendications précédentes,
**caractérisé par le fait que** le système est prévu pour la transmission sécurisée de télégrammes.

9. Procédé de transmission de télégrammes entre un premier et un deuxième moyen de communication (1, 2), dans lequel on détermine une valeur de contrôle (30) à partir d'une partie de données utiles (32 à 35) d'un télégramme, avec un premier compteur de télégrammes du premier moyen de communication (1), on associe une valeur de comptage (34, 35) à un télégramme en fonction d'un ordre d'émission, la valeur de comptage (34, 35) lors de la détermination de la valeur de contrôle (30) fait partie de la partie de données utiles (32 à 35), on transmet une information signalant une modification de la valeur de comptage comme partie de la partie de données utiles du télégramme, et on synchronise un deuxième compteur de télégrammes d'un deuxième moyen de communication (2) avec le premier compteur de télégrammes, **caractérisé par le fait que**, pour la synchronisation des compteurs de télégrammes, on transmet une information de remise à l'état initial (33) entre les moyens de communication (1, 2) lors du démarrage d'une communication et après l'occurrence d'une erreur de communication, l'information de remise à l'état initial (33) étant combinée avec une remise à l'état initial des compteurs de télégrammes sur une valeur de remise à l'état initial.

10. Procédé selon la revendication 9,
**caractérisé par le fait que** l'on divise la valeur de comptage (34, 35) en positions de poids fort (34) et en au moins une position de poids faible (35) et **par le fait que** l'information signalant une modification de la valeur de comptage est la ou les positions de poids faible (35).

11. Procédé selon l'une des revendications 9 ou 10,
**caractérisé par le fait que** la valeur de comptage (34, 35) est une valeur binaire, les positions de poids fort (34) comprenant tous les bits de poids fort de la valeur de comptage et la ou les positions de poids faible (35) comprenant le bit de poids le plus faible de la valeur de comptage.

12. Procédé selon l'une des revendications 9 à 11,
**caractérisé par le fait que** la valeur de contrôle (30) est déterminée par un contrôle de redondance cyclique.

13. Procédé selon l'une des revendications 9 à 12,
**caractérisé par le fait que** les moyens de communication (1, 2) sont des abonnés de communication dans un réseau commuté.

14. Procédé selon l'une des revendications 9 à 13,
**caractérisé par le fait que** les moyens de communication (1, 2) sont des abonnés de communication dans un système de bus de terrain.

15. Procédé selon l'une des revendications 9 à 14,
**caractérisé par le fait que** les télégrammes sont mémorisés au moins en partie dans les moyens de communication (1, 2).

16. Procédé selon l'une des revendications 9 à 15,
**caractérisé par le fait que** les télégrammes sont transmis de façon sécurisée.
